# EUROPÄISCHE PATENTSCHRIFT

(11) **EP 2 602 085 B1**
(45) Veröffentlichungstag und Bekanntmachung des Hinweises auf die Patenterteilung: **25.11.2015**
(21) Anmeldenummer: 11192676.2
(22) Anmeldetag: 08.12.2011
(51) Int. Cl.: B29C 45/73, B29C 35/00

(54) **Vorrichtung und Verfahren zur Durchflusstemperierung eines Spritzgießwerkzeuges**
Device and method for tempering the flow of an injection moulding tool
Dispositif et procédé destinés à la régulation du débit d'un outil de moulage par injection

(43) Veröffentlichungstag der Anmeldung: 12.06.2013
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- EP-A1- 1 493 544
- WO-A1-2004/012921
- DE-A1-102005 032 324
- DE-B3- 10 329 493
- DE-U1- 20 017 190
- DE-U1- 20 304 841
- DE-U1- 20 310 275
- US-A1- 2009 174 101

## Beschreibung

Die Erfindung betrifft eine Vorrichtung zur Durchflusstemperierung eines Spritzgießwerkzeuges nach dem Patentanspruch 1. Die Erfindung betrifft darüber hinaus ein Verfahren zur Durchflusstemperierung eines Spritzgießwerkzeuges nach dem Patentanspruch 5.

Beim Kunststoffspritzgießen wird mit einer Spritzgießmaschine der jeweilige Kunststoff in einer Spritzeinheit plastifiziert und anschließend in ein Spritzgießwerkzeug eingespritzt. Anschließend wird das Werkzeug abgekühlt, um das Spritzgussteil zügig auszuhärten, welches anschließend ausgeworfen wird, wonach der nächste Spritzgusszyklus beginnt. Die Temperaturführung des Werkzeugs spielt hierbei eine außerordentliche Rolle. Daher wurden in der Vergangenheit aufwendige Verfahren entwickelt, um eine optimale Temperaturführung des Werkzeugs zu erreichen. So ist es bekannt, das Spritzgusswerkzeug kontinuierlich über Temperatursensoren zu überwachen und einen durch das Werkzeug geführten Fluidkreislauf in Abhängigkeit von den ermittelten Messwerten hinsichtlich Druck und Temperatur einzuregeln. Verschiedene Temperiersysteme sind in den Druckschriften DE 203 10 175 U1, DE 203 04 841 U1, DE 200 17 190 U1 sowie US 2009/174101 A1 beschrieben. Neuere Entwicklungen gehen dahin, die kontinuierliche Temperaturüberwachung auf Teilbereiche eines Werkzeugs zu erstrekken, sodass verschiedene Werkzeugbereiche getrennt voneinander überwacht und deren Fluiddurchfluss in separaten Kreisläufen, die durch unterschiedliche Bereiche des Werkzeugs geführt sind, getrennt geregelt werden. Ziel ist es dabei, eine ungleichmäßige Temperaturverteilung über das Werkzeug und damit einhergehende unzureichende Teilequalität und unnötig lange Kühlzeiten zu vermeiden. Der Oberbegriff des Anspruchs 1 geht von der DE 203 04 841 U1 aus.

Hier setzt die vorliegende Erfindung an. Der Erfindung liegt die Aufgabe zugrunde, eine Vorrichtung zur Durchflusstemperierung eines Spritzgießwerkzeuges zu schaffen, welche eine zuverlässige und zugleich kostengünstige Überwachung und Steuerung mehrerer Kühlkreisläufe eines Spritzgießwerkzeuges ermöglicht. Gemäß der Erfindung wird diese Aufgabe durch eine Vorrichtung mit den Merkmalen des Patentanspruchs 1 gelöst.

Mit der Erfindung ist eine Vorrichtung zur Durchflusstemperierung eines Spritzgießwerkzeuges geschaffen, welche eine zuverlässige und zugleich kostengünstige Überwachung und Steuerung mehrerer Kreisläufe zur effizienten Temperierung des Spritzgießwerkzeuges ermöglicht. Durch das Vorsehen eines Proportionalventils an jedem der wenigstens zwei Kreislaufsmodule ist eine entsprechend der jeweiligen Prozessanforderungen erforderliche Nachregelung eines jeden Kühlkreislaufs ermöglicht.

Die Kreislaufmodule sind mit einem Durchflussmengenmesser verbunden, wobei die Durchflussmengenmesser mit der Steuer- und Regeleinrichtung verbunden sind. Durch das Vorsehen eines Durchflussmengenmessers an jedem der wenigstens zwei Kreislaufsmodule ist die Gewährleistung eines minimalen Durchflusses innerhalb der Kreisläufe ermöglicht. Dadurch ist eine prozessspezifische Temperaturerfassung ermöglicht. Alternativ kann hierzu auch eine Wegbegrenzung der Proportionalventile erfolgen. Diese Möglichkeit ist jedoch vorliegend nicht zu bevorzugen und damit nicht Teil der Erfindung da die Regelungsmöglichkeiten begrenzt sind.

In der Erfindung fungiert die jeweils von dem Sensor eines Kreislaufmoduls erfasste Rücklauftemperatur als Führungsgröße für die Regelung der Proportionalventile. Hierdurch ist eine prozessnahe Führungsgröße zur Regelung der Wassermenge der einzelnen Kühlkreisläufe bereitgestellt.

In Ausgestaltung der Erfindung weist die Steuer- und Regeleinrichtung ein Bedienfeld zur Eingabe von Regelungsparametern sowie zur Erfassung von aktuellen Betriebsdaten auf, das als Touchscreenfeld ausgebildet ist. Hierdurch ist eine übersichtliche Bereitstellung aller relevanten Betriebsparameter sowie eine intuitive Bedienung der Steuer- und Regelungseinrichtung ermöglicht.

In der Erfindung ist ein Kühlwassernetzanschluss angeordnet, der mit den wenigstens zwei Kreislaufmodulen verbunden ist. Hierdurch ist ein zentraler Wasseranschluss für alle Kühlkreisläufe bereitgestellt, der den zentralen Wasserzufluss für alle Kühlkreisläufe darstellt.

Der Erfindung liegt weiterhin die Aufgabe zugrunde, ein Verfahren zur Durchflusstemperierung eines Spritzgießwerkzeuges zu schaffen, welches eine zuverlässige und gleichzeitig kostengünstige Überwachung und Steuerung mehrerer Kühlkreisläufe eines Spritzgießwerkzeugs ermöglicht. Gemäß der Erfindung wird diese Aufgabe durch die Merkmale des Patentanspruchs 5 gelöst.

In jedem Kühlkreislauf wird ein Durchflussmengenmesser angeordnet. Hierdurch ist ein Minimaldurchfluss der Kreisläufe ermöglicht. Darüber hinaus geben die Durchflussmengenmesser Aufschluss über den Stellgrad der Proportionalventile.

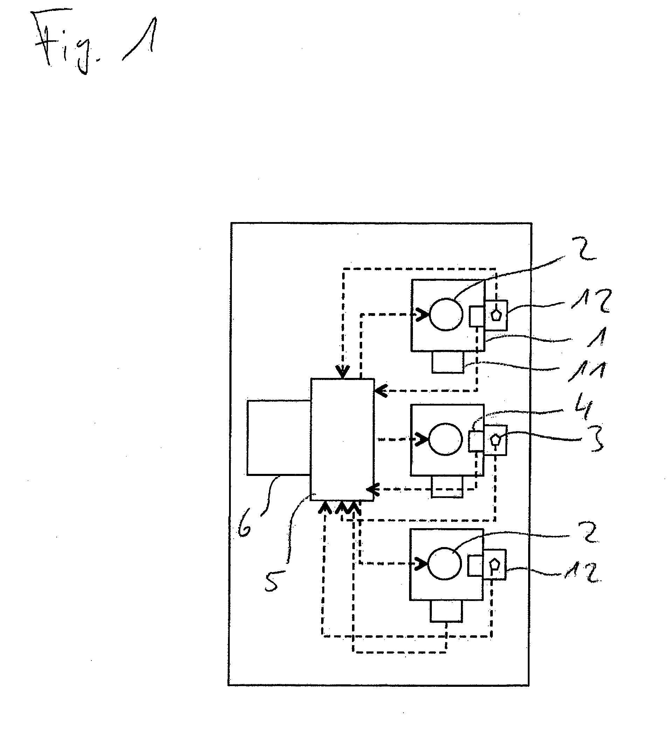

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt die schematische Darstellung einer Vorrichtung zur Durchflusstemperierung eines Spritzgießwerkzeuges.

Die als Ausführungsbeispiel gewählte Vorrichtung besteht im Wesentlichen aus drei identisch aufgebauten Kreislaufmodulen 1, welche mit einem Vorlaufanschluss 11 sowie einem Rücklaufanschluss 12 versehen sind. Die Kreislaufmodule 1 weisen ein Proportionalventil 2 zur Regelung der Durchflussmenge des jeweiligen Kreislaufs auf. Weiterhin ist im Rücklaufanschluss 12 ein Rücklauftemperatursensor 3 sowie diesen vorgeschaltet ein Durchflussmengenmesser 4 angeordnet.

Es ist eine zentrale Steuer- und Regeleinrichtung 5 angeordnet, welche mit den Proportionalventilen 2, den Rücklauftemperatursensoren 3 sowie den Durchflussmengenmessern 4 der Kreislaufmodule 1 verbunden ist und die entsprechend der Prozessvorgaben sowie den anliegenden Betriebsdaten den Kühlwassermengendurchfluss in den Kühlwasserkreisläufen über die Proportionalventile 2 regelt.

Die Steuer- und Regeleinrichtung 5 ist mit einem Touchscreen 6 verbunden, über das die Eingabe von Betriebsparametern fließt. Weiterhin erfolgt über das Touchscreen 6 eine Anzeige sämtlicher relevanten Betriebskenndaten, sodass der jeweilige aktuelle Zustand der Kühlkreisläufe mit einem Blick zu erfassen sind. Die Kreislaufmodule 1 sind über einen - nicht dargestellten - zentralen Kühlwasseranschluss verbunden. Die Vorrichtung ist innerhalb eines Rahmens modular aufgebaut, sodass entsprechend der jeweils erforderlichen Kühlkreisläufe erforderliche Kreislaufmodule hinzugefügt werden können. Ein solcher Rahmen ermöglicht auch einen mobilen Einsatz der Vorrichtung. Hierzu kann die Vorrichtung mit Staplerschuhen zur Aufnahme von einem Gabelstapler oder auch mit Rollen ausgestattet sein.

Das von einem zentralen Anschluss gelieferte Kühlwasser wird über die Proportionalventile 2 entsprechend den von den Rücklauftemperatursensoren 3 und dem Durchflussmengenmessern 4 gelieferten Prozessdaten auf die einzelnen Kühlmittelkreisläufe verteilt. Die Wassermengen werden entsprechend der anliegenden Betriebsdaten über die Steuer- und Regeleinrichtung 6 für jeden einzelnen Werkzeugkühlkreislauf geregelt.

## Patentansprüche

1. Vorrichtung zur Durchflusstemperierung eines Spritzgießwerkzeuges, mit wenigstens zwei Kreislaufmodulen (1) zur Bildung von wenigstens zwei Fluidkreisläufen, umfassend jeweils einen Vorlaufanschluss (11), einen Rücklaufanschluss (12), ein Proportionalventil (2) sowie einen Sensor (3) zur Erfassung der Rücklauftemperatur, **dadurch gekennzeichnet, dass** die Proportionalventile (2), und die Sensoren (3) der wenigstens zwei Kreislaufmodule (1) mit einer Steuer- und Regeleinrichtung (5) verbunden sind, die zur Steuerung und Überwachung der Temperatur der mit den Kreislaufmodulen (1) gebildeten Fluidkreisläufe eingerichtet ist, wobei die Steuerung der Temperatur über eine Regelung des Kühlwassermengendurchflusses in den Fluidkreisläufen über die Proportionalventile (2) erfolgt, wobei die Kreislaufmodule (1) mit einem Durchflussmengenmesser (4) verbunden sind, und wobei die Durchflussmengenmesser (4) mit der Steuer- und Regeleinrichtung (5) verbunden sind.

2. Vorrichtung nach Anspruch 1, **dadurch gekennzeichnet, dass** die Steuer- und Regelungseinrichtung (5) derart eingerichtet ist, dass die jeweils von dem Sensor (3) eines Kreislaufmoduls (1) erfasste Rücklauftemperatur als Führungsgröße für die Regelung der Proportionalventile (2) fungiert.

3. Vorrichtung nach Anspruch 1 oder 2, **dadurch gekennzeichnet, dass** die Steuer- und Regeleinrichtung (5) ein Bedienfeld (6) zur Eingabe von Regelungsparametern sowie zur Erfassung von aktuellen Betriebsdaten aufweist, das als Touchscreenfeld ausgebildet ist.

4. Vorrichtung nach einem der vorgenannten Ansprüche, **dadurch gekennzeichnet, dass** ein Kühlwassernetzanschluss angeordnet ist, der mit den wenigstens zwei Kreislaufmodulen (1) verbunden ist.

5. Verfahren zur Durchflusstemperierung eines Spritzwerkzeuges mit einer Vorrichtung nach einem der Ansprüche 1 bis 4 , **dadurch gekennzeichnet, dass** die Steuerung der Temperatur über in jedem Kühlreislauf angeordnete Proportionalventile (2) erfolgt, über die der Kühlwassermengendurchfluss geregelt wird, und wobei die Rücklauftemperatur jedes Kühlkreislaufes erfasst wird, welche als Führungsgröße für die Regelung eingesetzt wird, wobei in jedem Kühlkreislauf ein Durchflussmengenmesser (4) angeordnet wird.

## Claims

1. Device for tempering the flow of an injection moulding tool having at least two circuit modules (1) for forming at least two fluid circuits respectively comprising a flow connection (11), a return connection (12), a proportional valve (2) as well as a sensor (3) for measuring the return temperature, **characterised in that** the proportional valves (2) and the sensors (3) of the at least two circuit modules (1) are connected to a control and regulating device (5), which is arranged to control and monitor the temperature of the fluid circuits formed by the circuit modules (1), wherein the control of the temperature occurs via a control of the cooling water flow in the flood circuits via the proportional valves (2), wherein the circuit modules (1) are connected to a flow meter (4) and wherein the flow meters (4) are connected to the control and regulating device (5).

2. Device according to claim 1, **characterised in that** the control and regulating device (5) is designed in a way that the return temperature respectively measured by the sensor (3) of a circuit module (1) serves as a reference variable for regulating the proportional valves (2).

3. Device according to claim 1 or 2, **characterised in that** the control and regulating device (5) has a control panel (6) for entering control parameters as well as for recording current operating data, which is designed as a touch screen panel.

4. Device according to one of the previous claims, **characterised in that** a cooling water network supply is arranged, which is connected to the at least two circuit modules (1).

5. Method for tempering the flow of an injection moulding tool with a device according to one of claims 1 to 4, **characterised in that** the control of the temperature is carried out via proportional valves (2) arranged in each cooling circuit, via which the cooling water flow is regulated and wherein the return temperature of each cooling circuit is measured, which is used as a reference variable for the regulation, wherein in each cooling circuit a flow meter (4) is arranged.

## Revendications

1. Dispositif destiné à la régulation du débit d'un outil de moulage par injection, comprenant au moins deux modules à circuits (1) pour former au moins deux circuits de liquide comprenant chacun un raccord aller (11), un raccord retour (12), une vanne proportionnelle (2) ainsi qu'un capteur (3) pour saisir la température de retour, **caractérisé en ce que** les vannes proportionnelles (2) et les capteurs (3) d'au moins les deux modules à circuits (1) sont reliés à un dispositif de commande et régulation (5) configuré pour piloter et surveiller les circuits de fluide formés avec les modules à circuits (1), sachant que le pilotage de la température a lieu via une régulation du débit d'eau de refroidissement dans les circuits de fluide, via les vannes proportionnelles (2), sachant que les modules à circuits (1) sont reliés à un débitmètre (4) et sachant que les débitmètres (4) sont reliés au dispositif de commande et régulation (5).

2. Dispositif selon la revendication 1, **caractérisé en ce que** le dispositif de commande et régulation (5) est configuré de sorte que la température de retour respectivement saisie par le capteur (3) d'un module à circuit (1) officie de grandeur de guidage servant à la régulation des vannes proportionnelles (2).

3. Dispositif selon la revendication 1 ou 2, **caractérisé en ce que** le dispositif de commande et régulation (5) présente un champ de commande (6) configuré en champ d'écran tactile pour saisir des paramètres de régulation ainsi que pour saisir les données de service actuelles.

4. Dispositif selon l'une des revendications précédentes, **caractérisé en ce qu'**est agencé un raccord de réseau d'eau de refroidissement relié à au moins deux modules à circuits (1).

5. Procédé destiné à la régulation du débit d'un outil de moulage par injection équipé d'un dispositif selon l'une des revendications 1 à 4, **caractérisé en ce que** le pilotage de la température a lieu via des vannes proportionnelles (2) disposées dans chaque circuit de refroidissement, vannes via lesquelles est régulé le débit d'eau de refroidissement, et sachant qu'est saisie la température de retour de chaque circuit de refroidissement, température qui sert de grandeur de pilotage de la régulation, sachant qu'un débitmètre (4) est disposé dans chaque circuit de refroidissement.
